# EUROPEAN PATENT APPLICATION

(11) **EP 1 522 843 A2**
(43) Date of publication of application: **13.04.2005**
(21) Application number: 04256200.9
(22) Date of filing: 07.10.2004
(51) Int. Cl.: G01N 21/45

(54) **Method and apparatus for use in determining refractive index**

(30) Priority: 07.10.2003 GB 0323419
(71) Applicant: Interferomet Limited, Midhurst, West Sussex GU29 9PX (GB)
(72) Inventor: Downs, Michael J., Liphook Hampshire, GU30 7HF (GB)
(74) Representative: Targett, Kenneth Stanley

(57) **Abstract**

An interferometric refractometer has an interferometer head 12 that produces two laser beams (T1_{A},T1_{S},R1_{S},R1_{A}; T2_{A},T2_{S},R2_{S},R2_{A}) which are superposed in the interferometer head to form interferograms having fringes which are counted as the difference between the number of waves in the beams changes. One of the beams has a portion (T2_{S}) that passes through a chamber (58) containing a sample of a fluid. In order to determine the refractive index of the fluid, the interferogram fringes are counted while the length of the beam portion that passes through the chamber is varied by a measured or predetermined displacement and the refractive index is calculated from the displacement, the fringe count and the wavelength of the laser beam. In a preferred embodiment, said one beam has another portion (R2_{S}) that passes through the chamber, the other beam has two portions (T1_{S},R1_{S}) that pass through another chamber or chambers (60) containing a sample of a comparison or reference fluid, and the lengths of the beam portions that pass through the chambers are varied by the same amount. The refractometer avoids the need in known apparatus of exchanging fluids in a chamber while the interferogram fringes are counted.

## Description

This invention relates to a method of and an apparatus for use in determining the refractive index of a sample of a fluid.

Knowledge of the refractive index of a fluid sample can be used in industry, for example in assessing the concentration of sugar or sweetener in soft drinks, the amount of dissolved carbon dioxide in carbonated drinks, the alcohol content of alcoholic drinks, the stage of fermentation during a brewing process, or the salinity of sea water. It is desirable to be able to measure the refractive index with high accuracy. Known methods of accurately measuring refractive index are suggested in patent documents US5546184A (particularly with reference to Figures 16A and 16B thereof) and GB2365142A (particularly with reference to Figure 6 thereof). In those known methods, an interferometer produces a pair of beams of light that are combined to form interferogram fringes with variations in the difference between the number of waves of the light in the beams. A portion of one of the beams is passed through a cell containing a test sample of liquid. The test sample is then progressively exchanged with a reference liquid having a known refractive index so that the refractive index of the liquid in the cell progressively changes from that of the test sample to the known reference index. While the exchange is taking place, the number of waves of light in the cell changes, and the number of interferogram fringes thus caused is counted by the interferometer. From the number that is counted, the wavelength of the light and the distance travelled by the light in the cell, it is possible to calculate the comparative refractive index of the test sample relative to the reference liquid, and from the refractive index of the reference liquid, it is possible to calculate the absolute refractive index of the test sample.

A limitation with the known method is that there must be a sufficiently slow and progressive change of the refractive index of the liquid in the cell. If there is step change or if the change is too fast, the interferometer may skip one or more counts, or lose contrast and miscount the optical fringes produced in the system, resulting in an inaccurate result.

The method of a first aspect of the present invention is based on the known method described above, but it does not rely on the counting of interferogram fringes while exchanging the fluid being tested. Instead, the length of the portion of said one beam that passes through the fluid sample is varied whilst counting the number of fringes caused by the length variation, and the number that is counted and the amount of the distance variation is used in determining the refractive index of the fluid. This method does not therefore suffer from the limitation mentioned above. Furthermore, because it is unnecessary to replace one fluid with another, i.e. to wash out the first fluid with the second, less fluid needs to be used.

The sample is preferably contained between a pair of generally parallel windows, with said portion of said one beam passing through both windows, and with the spacing of the windows being varied in order to vary the length of the portion of said one beam passing through the fluid sample. Preferably, the spacing of the windows is varied by moving at least one of the windows relative to the other window in a direction generally parallel to said portion of said one beam. Preferably, the method further includes passing a second portion of said one beam through the fluid sample in the opposite direction to the first-mentioned portion, and varying the length of the second portion of said one beam that passes through the fluid sample by generally the same amount as (and preferably the identical amount to) the first-mentioned length variation. This doubles the number of interferogram fringes to be counted. Furthermore, said second portion of said one beam preferably passes through both windows. This facilitates varying the length of both portions of said one beam by the same amount.

Preferably, the method further includes the feature of passing a portion of the other beam of the interferometer through a sample of a second fluid or a vacuum, and varying the length of the portion of said other beam that passes through the second fluid sample or vacuum by generally the same amount as (and preferably the identical amount to) the first-mentioned length variation. The number of fringes counted is proportional to the amount of variation of the lengths of the beam portions and the difference between the refractive indices of the fluid samples. Therefore this additional feature may be provided merely to enable the difference between refractive indices of the fluid samples to be determined. However, in the case where the second sample is a reference sample having a known absolute refractive index, the absolute refractive index of the first sample can also be determined. It should be noted that, because the fringe count is proportional to the length variation of the beam portions and the difference between the refractive indices of the fluid samples, the order of accuracy of the determined absolute refractive index of the sample fluid can be greater than the order of accuracy of the length variation. For example, if the refractive index of the test sample differs by 10% from the refractive index of the reference sample, a 1 in 10⁵ error in the length variation produces only a 1 in 10⁶ error in the determined refractive index, and if the refractive index of the test sample differs by 1% from the refractive index of the reference sample, an error as great as 1 in 10⁴ in the length variation produces an error of only 1 in 10⁶ in the determined refractive index.

In the case where two samples are used, the samples are preferably contained in a body having a high heat capacity relative to the samples (for example of the order of one hundred times higher or more). This facilitates equalisation of the temperatures of the samples. Accordingly, in the case where the rates of change of refractive index with temperature of the first and second samples are similar, this leads to the determined refractive index being largely independent of temperature.

In the case where the portion of the other beam is passed through a vacuum (which of course has a refractive index of unity), the counted number will be directly proportional to the difference between the absolute refractive index of the first sample and one, albeit at the temperature of the first sample.

In the case where a second portion of said one beam is passed through the fluid sample in the opposite direction to the first-mentioned portion, the method preferably further includes, for similar reasons, passing a second portion of said other beam through the second fluid sample or vacuum in the opposite direction to the first-mentioned portion thereof, and varying the length of the second portion of said other beam that passes through the second fluid sample or vacuum by generally the same amount as (and preferably the identical amount to) the first-mentioned length variation. Furthermore, in the case where the first sample is contained between a pair of generally parallel windows, said second sample or vacuum is preferably also contained between said windows and each portion of said other beam also passes through both windows. This facilitates varying the length of both portions of both beams by the same amount. In this case, said first and second portions of both beams are preferably generally coplanar and mutually generally-parallel, with said first and second portions of said one beam being disposed between said first and second portions of said other beam or vice versa. This compensates for any tilting of the windows relative to each other as their spacing is varied.

Although the method is particularly advantageous in the case where the, or each, sample is a liquid, the method may also be used to determine the refractive index of a gas.

In accordance with a second aspect of the invention, there is provided a corresponding apparatus for use in determining the refractive index of a sample of a fluid.

In accordance with a third aspect of the invention, there is provided a refractometer module for use in such an apparatus. The refractometer module is preferably readily removable from the remainder of the apparatus in order to facilitate cleaning and other maintenance and so that the refractometer module can be replaced by a further such module having different characteristics.

A specific embodiment of the present invention and some modifications thereto will now be described, purely by way of example, with reference to the accompanying drawings, in which:
- Figure 1: is a schematic block diagram of an apparatus for use in determining refractive index;
- Figure 2: is a schematic diagram of an interferometer head module forming part of the apparatus of Figure 1;
- Figure 3: is a plan view of an interferometer reflector/modulator module forming part of the apparatus of Figure 1;
- Figure 4: is a sectioned plan view of a refractometer module forming part of the apparatus of Figure 1;
- Figures 5A&B: are sectioned side views of the refractometer module of Figure 4 in two different positions;
- Figure 6: is an isometric view of the refractometer module of Figure 4;
- Figure 7: is a sectioned plan view of part of refractometer of Figures 4 to 6, modified so as also to incorporate a reflector in a single module;
- Figure 8: is a sectioned plan view of a modification to the combined refractometer/reflector module of Figure 7;
- Figure 9 & 10: are sectioned plan views of further modifications to the refractometer module of Figures 4 to 6;
- Figure 11: is a sectioned plan view of another modification to the combined refractometer/reflector module of Figure 7;
- Figures 12 & 13: are schematic views of the apparatus of Figure 1; and
- Figures 14-16: are schematic views of further modifications to the apparatus of Figure 1.

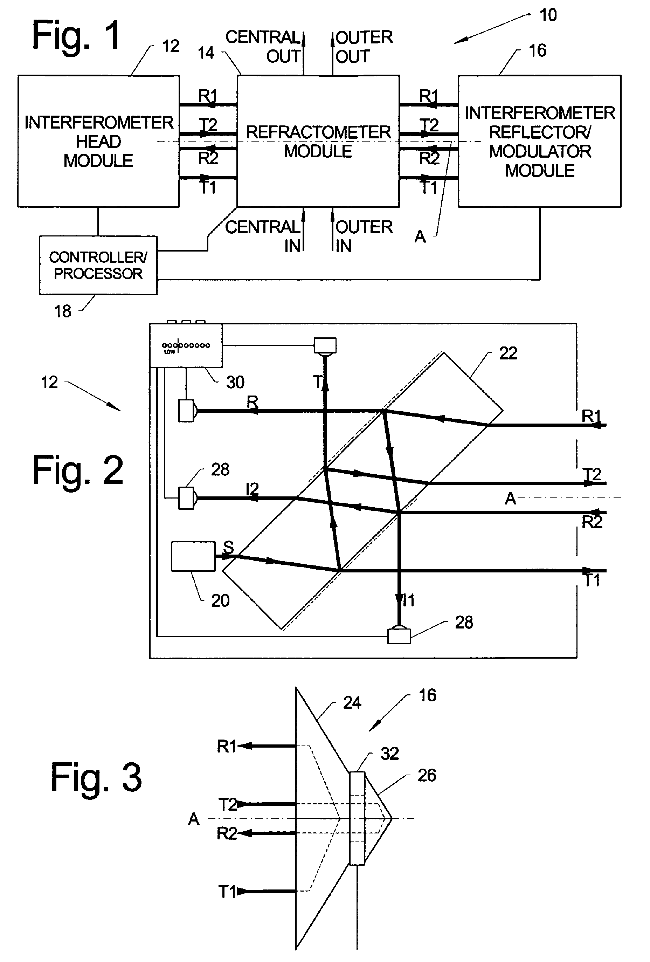

Referring to Figures 1 to 3, in overview, the apparatus 10 comprises an interferometer head module 12, a refractometer module 14, an interferometer reflector/modulator module 16 and a controller/processor module 18. The head module 12 includes a helium-neon laser source 20 that generates a laser beam S having a wavelength λ of about 632.9908 nm in vacuum. The beam S is split by a Jamin block 22 into two mutually-parallel beams T1,T2 that are transmitted to the reflector/modulator module 16. The reflector/modulator module 16 has a centrally-transmitting/peripherally-retroreflecting block 24 formed by a truncated cube-corner. The block 24 is arranged so that its peripherally-retroreflecting portion retroreflects the beam T1 as a reflected beam R1 spaced from the beam T1 and so that its centrally-transmitting portion transmits the beam T2. A cube-corner retroreflector 26 is mounted behind the centrally-transmitting portion of the block 24 and retroreflects the beam T2 back through the centrally-transmitting portion of the block 24 as a reflected beam R2 spaced from the beam T2. The reflector/modulator module 16 is arranged relative to the transmitted beams T1,T2 such that the transmitted and reflected beams T1,T2,R1,R2 are mutually coplanar and such that the beams are in the order T1, R2, T2, R1 symmetrically arranged about a primary axis A of the apparatus 10. The reflected beams R1,R2 return to the head module 12. The refractometer module 14 is arranged in the paths of the beams T1,T2,R1,R2 such that the transmitted beam T1 and its reflected beam R1 each pass through a sample of a first liquid in the refractometer module 14, and the transmitted beam T2 and its reflected beam R2 each pass through a sample of a second liquid in the refractometer module 14. The Jamin block 22 in the head module 12 superposes the reflected beams R1,R2 to form first and second interferogram beams I1,I2 in which fringes are formed as the difference between the number of waves of laser light in, on the one hand, the beams T1,R1 and, on the other hand, the beams T2,R2 varies. The interferogram beams I1,I2 are generally in phase quadrature so that the sign of the variation can be determined. Each interferogram beam I1,I2 is detected by a respective photo-detector 28. The signals from the photo-detectors 28 are processed by pre-processing circuitry 30. During calibration of the apparatus, a piezo element 32 between the block 24 and retroreflector 26 is oscillated to modulate the path difference between the beams T1,R1 and the beams T2,R2 and correction values are derived. During subsequent use of the apparatus, the piezo element 32 is not modulated, and the correction values are employed so that the pre-processing circuitry 30 produces, from the signals from the photo-detectors 28, normalised complementary sine and cosine signals sin2πΔW, cos2πΔW where ΔW is the difference between, on the one hand, the number of waves in the beams T1,R1 and, on the other hand, the number of waves in the beams T2,R2. The sine and cosine signals are output from the head module 12 to the controller/processor module 18 where, by detecting the peaks in the sine and cosine signals it is possible to determine ΔW to an accuracy of a quarter of a wave. However, by using fringe sub-division techniques based on the ratio of the sine and cosine signals (the arctangent), it is possible to determine ΔW to an accuracy approaching one-thousandth of a wave. By modifying the wave difference produced by the refractometer module 14 in dependence upon the refractive indices of the liquids in the refractometer module 14, it is possible to determine the difference between the refractive indices, and therefore if the refractive index of one of the liquids is known, it is possible to determine the refractive index of the other liquid.

Insofar as is described in the preceding paragraph, the apparatus 10 is known from patent document GB2365142A, the content of which is incorporated herein by reference, and to which reference is directed for further information about the head module 12 and the reflector/modulator module 16. In the refractometer of GB2365142A, the wave difference produced by the refractometer module 14 is modified by gradually exchanging one of the liquids through which one of the transmitted beams, say T1, and its reflected beam R1 pass for the other liquid so that all of the beams T1,R1;T2,R2 pass through the other liquid. As mentioned above, there must be a sufficiently slow and progressive exchange of the liquids because, if there is step change or if the change is too fast, the interferometer may skip one or more counts, or lose contrast and miscount the optical fringes produced in the apparatus, resulting in an inaccurate result.

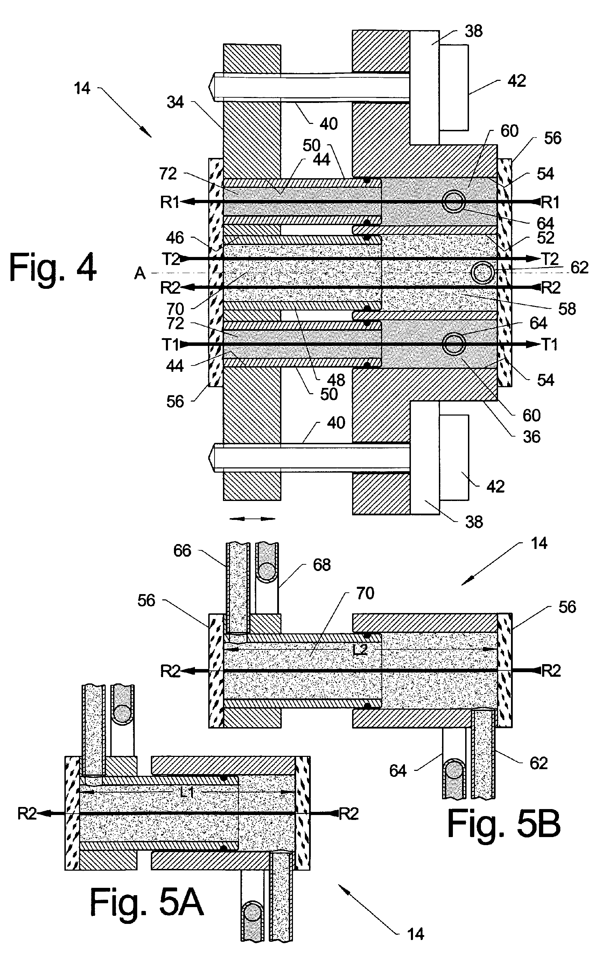

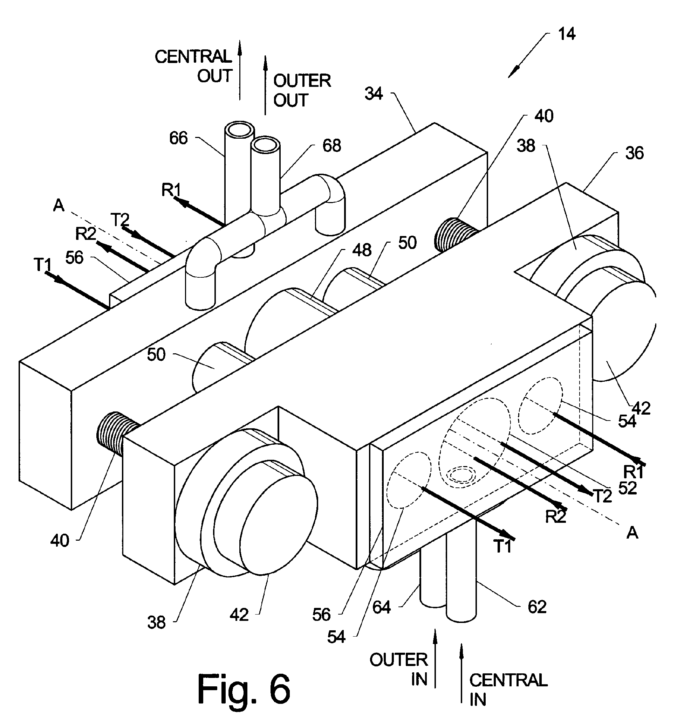

The refractometer module 14 of the present embodiment will now be described with reference to Figures 4 to 6. The refractometer module 14 comprises a pair of blocks 34,36 that are coupled together for relative translational movement along the primary axis A, for example by a pair of electric motors 38, lead screws 40 and rotary encoders 42, or by any other suitable means. The block 34 has a central through-hole 44 coaxial with the primary axis A and to either side thereof a pair of smaller through-holes 46 coaxial with the first transmitted beam T1 and the first reflected beam R1, respectively. Each of the holes 44,46,46 has a respective sleeve 48,50,50 fitted therein and projecting towards the block 36. The block 36 has a central through-hole 52 coaxial with the primary axis A and to either side thereof a pair of smaller through-holes 54 coaxial with the first transmitted beam T1 and the first reflected beam R1, respectively. The sleeves 48,50,50 are a sliding fit in the holes 52,54,54, respectively, and O-rings or other sealing devices are provided between the sleeves 48,50,50 and the holes 52,54,54. The outer faces of the blocks 34,36 are covered with windows 56 of BK7 glass that seal the outer ends of the holes 44,46,52,54. The windows 56 are preferably removable so that they can be cleaned from time to time. The central sleeve 48, hole 52 and windows 56 therefore form a central chamber 58 through which the beams T2,R2 pass, and the outer sleeves 50, holes 54 and windows 56 form a pair of outer chambers 60, to either side of the central chamber 58, with the beam T1 passing through one of the outer chambers 60 and the beam R1 passing through the other outer chamber 60. The lengths of the three chambers 58,60 between the windows 56 can be varied, by driving the motors 38, between a length L1 as shown in Figure 5A and a length L2 as shown in Figure 5B, and the amount of movement ΔL=L2-L1 can be determined from the encoders 42 or any other suitable means. An inlet pipe 62 for the central chamber 58 and a branched inlet pipe 64 for the outer chambers 60 feed upwardly into and through the block 36, and an outlet pipe 66 for the central chamber 58 and a branched outlet pipe 68 for the outer chambers 60 feed upwardly through and from the block 34. First and second liquid samples 70,72 can therefore be fed through the inlet pipes 64,62 into the outer chambers 60 and the central chamber 58, respectively, and the liquid samples 70,72 can be removed from the chambers 60,58 through the outlet pipes 68,66 and can be vented such that the pressures of the liquid samples 70,72 in the chambers 60,58 are substantially identical. The blocks 34,36 and sleeves 48,50 are made of a material or materials, such as metal, having a high specific heat capacity compared to that of the liquid samples 70,72 and are of sufficient mass so that the heat capacity of the blocks 34,36 and sleeves 48,50 is many times greater (e.g. more than one hundred times greater) than the heat capacity of the samples 70,72 in the chambers 58,60. Accordingly, when the samples 70,72 are introduced into the chambers 58,60, the temperatures of the samples 70,72 will quickly equalise with the temperature of the interferometer module 14 and therefore with each other.

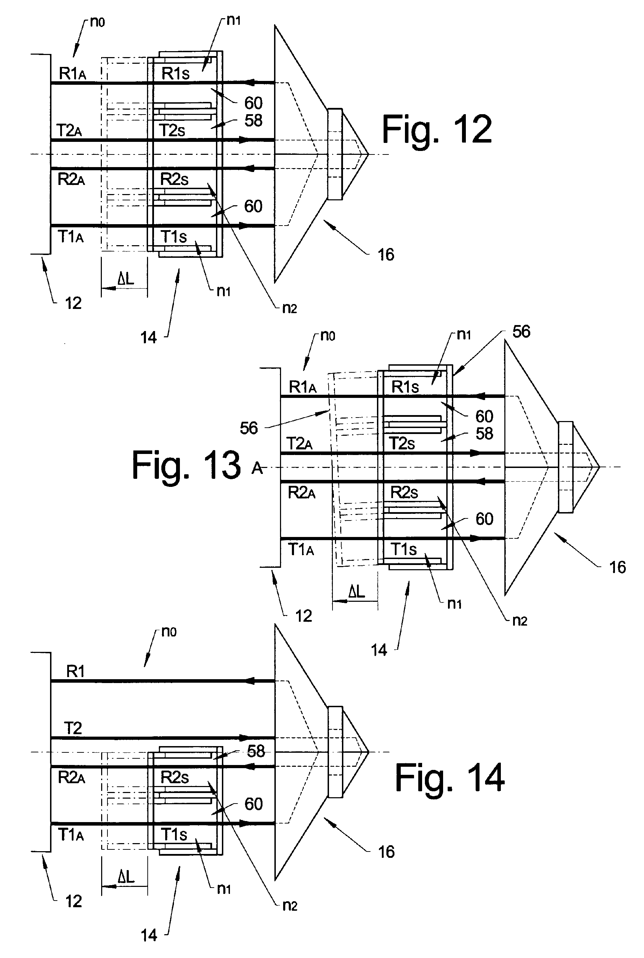

In operation, after the head module 12 has been calibrated as described above, the liquid samples 70,72 are introduced into the outer chambers 60 and the central chamber 58, and the temperatures are allowed to equalise, preferably to within 3 mK. The motors 38 are then operated by the controller/processor module 18 to increase the distance between the windows 56 by ΔL from L1 (Figure 5A) to L2 (Figure 5B), while at the same time the controller/processor module 18 counts the change ΔW in the difference between the number of waves in the beams T1,R1 and the beams T2,R2. Referring in particular to Figure 12, the displacement ΔL causes:-
- in the beams T1,R1:
   o an increase in the number of waves in the portion T1_{A} of the beam T1 passing through the air between the interferometer head module 12 and the refractometer module 14 of -ΔL.n₀/λ, where n₀ is the refractive index of air;
   o an increase in the number of waves in the portion T1ₛ of the beam T1 passing through the sample 70 in the chamber 60 of ΔL.n₁/λ;
   o an increase in the number of waves in the portion R1ₛ of the beam R1 passing through the sample 70 in the chamber 60 of ΔL.n₁/λ; and
   o an increase in the number of waves in the portion R1_{A} of the beam R1 passing through the air between the refractometer module 14 and the interferometer head module 12 of -ΔL.n₀/λ;
   resulting in a total increase of the number of waves in the beams T1,R1 of 2.ΔL(n₁-n₀)/λ; and
- in the beams T2,R2:
   o an increase in the number of waves in the portion T2_{A} of the beam T2 passing through the air between the interferometer head module 12 and the refractometer module 14 of -ΔL.n₀/λ;
   o an increase in the number of waves in the portion T2ₛ of the beam T2 passing through the sample 72 in the chamber 58 of ΔL.n₂/λ;
   o an increase in the number of waves in the portion R2ₛ of the beam R2 passing through the sample 72 in the chamber 58 of ΔL.n₂/λ; and
   o an increase in the number of waves in the portion R2_{A} of the beam R2 passing through the air between the refractometer module 14 and the interferometer head module 12 of -ΔL.n₀/ λ;
   resulting in a total increase of the number of waves in the beams T2,R2 of 2.ΔL(n₂-n₀)/λ.
Accordingly, the counted change ΔW in the difference between the number of waves in the beams T1,R1 and the beams T2,R2 is given by ΔW = 2.ΔL(n₂-n₀)/λ - 2.ΔL(n₁-n₀)/λ, which simplifies to ΔW = 2.ΔL(n₂-n₁)/λ and is independent of the refractive index n₀ of air (provided that the refractive index n₀ of the air through which the four beam portions T1_{A},R1_{A},T2_{A},R2_{A} pass is the same).

The controller/processor module 18 is therefore programmed to calculate the difference between the absolute refractive index n₁ of the sample 70 in the outer chambers 60 and the absolute refractive index n₂ of the sample 72 in the central chamber 58 from n₂ - n₁ = ½λ.ΔW/ΔL. If the absolute refractive index, say n₁, of one of the samples 70 is known by the controller/processor module 18, then the absolute refractive index n₂ of the other sample 72 can, of course, be calculated by the controller/processor module 18 from n₂ = n₁ + ½λΔW/ΔL. In this case, the relative refractive indices of the two samples 70,72 can also be calculated by the controller/processor module 18 from ₁n₂ = 1 + ½λ.ΔW/(ΔL.n₁) and ₂n₁) = 1/(₁n₂).

It should be noted that, in many applications of the invention, the difference n₂ - n₁ between the absolute refractive indices n₂,n₁ of the samples 72,70 will be small. In this case the relative displacement ΔL of the windows 56 does not need to be highly accurate in order to obtain a highly accurate measure of the comparative refractive index n₂ - n₁. For example, in the case where the sample 70 is distilled water with a known absolute refractive index n₁ of 1.331745 and the absolute refractive index n₂ of the test sample 72 is, say, about 1.34, an inaccuracy in the relative displacement of the windows 56 of e% will cause an inaccuracy in the calculated refractive index n₂ of the test sample 72 of only 0.006e%.

The refractive index of a liquid changes with temperature. However, it should be noted that, in many applications of the invention, the rates of change of the refractive indices n₁, n₂ of the two samples 70,72 with temperature will differ insignificantly over the range between the temperature of the refractometer module 14 and the standard temperature of 20°C at which refractive indices are usually quoted and can therefore be considered to be identical. In these circumstances, because the refractometer 14 equalises the temperatures of the samples 70,72, the calculated difference n₂ - n₁= ½λ.ΔW/ΔL between the refractive indices can be considered to hold good whether at the temperature of the refractometer module 14 or at standard temperature. Furthermore, the calculated absolute refractive index n₂ = n₁ + ½λ.ΔW/ΔL of the sample 72 can be considered to be its refractive index at standard temperature if the value n₁ that is used in the calculation is the refractive index of the reference sample 70 at standard temperature.

Referring now to Figure 13, it should be noted that the apparatus automatically compensates for any small tilting of the windows 56 relative to each other while they are being displaced by the distance ΔL, provided that the displacement ΔL is correctly measured along the axis A, the beams T1,R1 are symmetrically arranged about the axis A and the beams T2,R2 are symmetrically arranged about the axis A. The decrease in the number of waves in the beam portion T1ₛ caused by such tilting is equal to the increase in the number of waves in the beam portion R1ₛ. The increase in the number of waves in the beam portion T2ₛ caused by such tilting is equal to the decrease in the number of waves in the beam portion R2ₛ. The increase in the number of waves in the beam portion T1_{A} caused by such tilting is equal to the decrease in the number of waves in the beam portion R1_{A}. Lastly, the decrease in the number of waves in the beam portion T2_{A} caused by such tilting is equal to the increase in the number of waves in the beam portion R2_{A}.

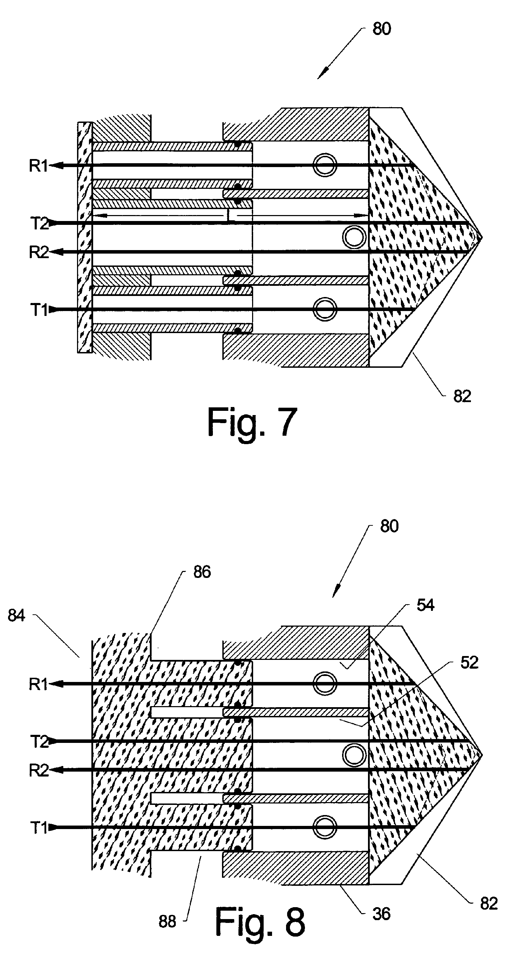

Various modifications may be made to the apparatus 10. For example, Figure 7 shows a combined refractometer/reflector module 80 that is similar to the refractometer module 14 of Figures 4 to 6, except that one of the windows 56 of Figures 4 to 6 is replaced by a cube corner reflector 82. In this case, the combined module 80 does not provide any specific facility for modulation in order to calibrate the apparatus. However, modulation can be provided in other ways, as described in patent document GB2365142A. Alternatively, the spacing between the window 56 and the reflector 82 may be modulated before and/or after a measurement is made in order to acquire the required calibration data. This may be done with the two samples in their chambers provided that the refractive indices of the two samples are sufficiently different, or with one chamber containing its sample and the other chamber containing air.

Figure 8 shows a modification to the combined refractometer/reflector module 80 of Figure 7, in which the block 34, sleeves 48,50 and other window 56 of Figure 7 are replaced by an integral block 84 of BK7 glass having a plate portion 86 and three cylindrical piston portions 88 that are a sliding fit in the through holes 52,54 in the block 36. In this case, the outlet pipes 66,68 (not shown) feed from the block 36.

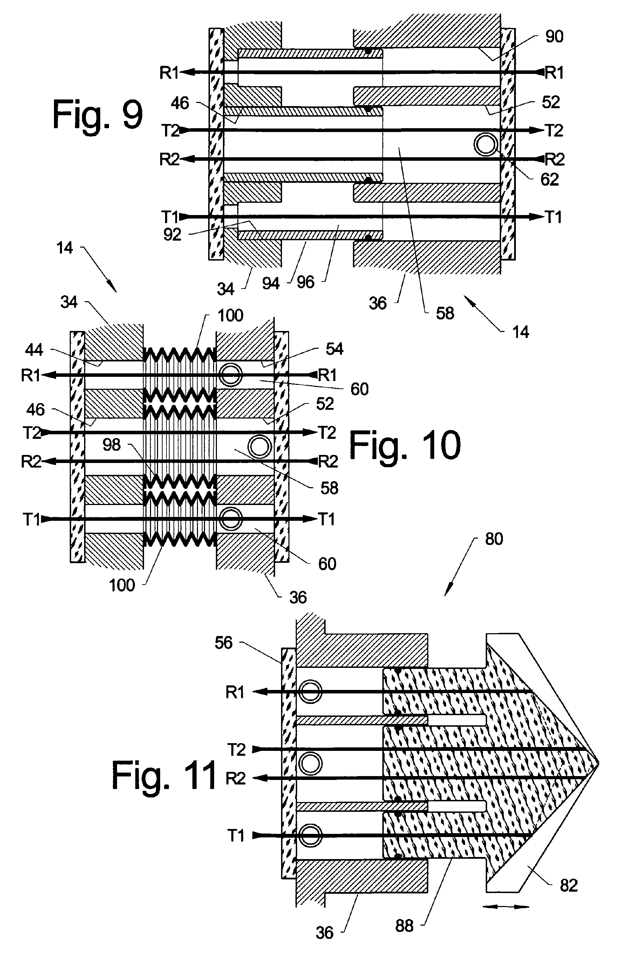

Figure 9 shows a refractometer module 14 that is similar to the module 14 of Figures 4 to 6, except that: the blocks 34,36 are taller than in the embodiment of Figures 4 to 6; the block 36 is formed with a single annular through hole 90 coaxial with the central hole 52 (instead of the two cylindrical through holes 54 to either side of the central hole 52 of Figures 4 to 6); the block 34 is formed with a single annular through hole 92 coaxial with the central hole 46 (instead of the two cylindrical through holes 44 to either side of the central hole 46 of Figures 4 to 6); the annular hole 92 is fitted with a sleeve 94 that is a sliding fit in the hole 90; a single annular outer chamber 96 is therefore formed (instead of the two outer chambers 60 of Figures 4 to 6); the outer inlet and outlet pipes 64,68 (not shown) do not need to be branched; and the central inlet pipe 62 and central outlet pipe 66 (not shown) need to pass through the outer chamber 96 into communication with the central chamber 58.

Figure 10 shows a refractometer module 14 that is similar to the module 14 of Figures 4 to 6, except that: the sleeves 48,50 are omitted; and the blocks 34,36 are joined by three elastomeric bellows 98,100,100, with the bellows 98 being coaxial with the central holes 46,52 in the blocks 34,36 and, in part, defining the central chamber 58, and with each of the bellows 100 being coaxial with a pair of the outer holes 44,54 in the blocks 34,36 and, in part, defining a respective one of the outer chambers 60.

Figure 11 shows a modification to the combined refractometer/reflector module 80 of Figure 8, in which the three cylindrical piston portions 88 are provided on the cube corner reflector 82 (instead of on the block 84); the cube corner reflector 82 and pistons 88 are slidable relative to the block 36; and a simple window 56 covers the left face of the block 36.

Although the apparatus has been described above for measuring the refractive index of a liquid or the comparative refractive index of two liquids, it may also be used for measuring the refractive index of a gas or the comparative refractive index of two gases. Furthermore, the central chamber 58 or the outer chamber(s) 60,96 may be evacuated so that the apparatus 10 may be used directly to measure the absolute refractive index of the fluid in the outer chamber(s) 60,96 or the central chamber 58. In this case, n₂ = 1 + ½λ.ΔW/ΔL. However, it should be noted that, in the case of measuring the absolute refractive index of a liquid in this manner, due to the likely relatively large difference between the absolute refractive index of the liquid and the absolute refractive index of a vacuum (unity), the relative displacement of the windows 56 (or their equivalents) will need to be more accurate than suggested above in order to obtain an accurate measure of the refractive index of the liquid. Also, since the rate of change of refractive index of the sample with temperature may now be significant, it may be considered necessary to measure the temperature of the sample and either quote the temperature or adjust the measured refractive index in accordance with a rate of change of refractive index with temperature that is known for the sample.

In the apparatus described above, all of the beams T1,R1,T2,R2 pass through one chamber 58 or the other(s) 60,96. As shown in Figure 14, in a modified apparatus only one T1 of the beams T1,R1 passes through a chamber 60 and only one R2 of the beams T2,R2 passes through a chamber 58. In this case, the factor of one half is omitted from the equations mentioned above; in other words n₂ = n₁ + λ.ΔW/ΔL.

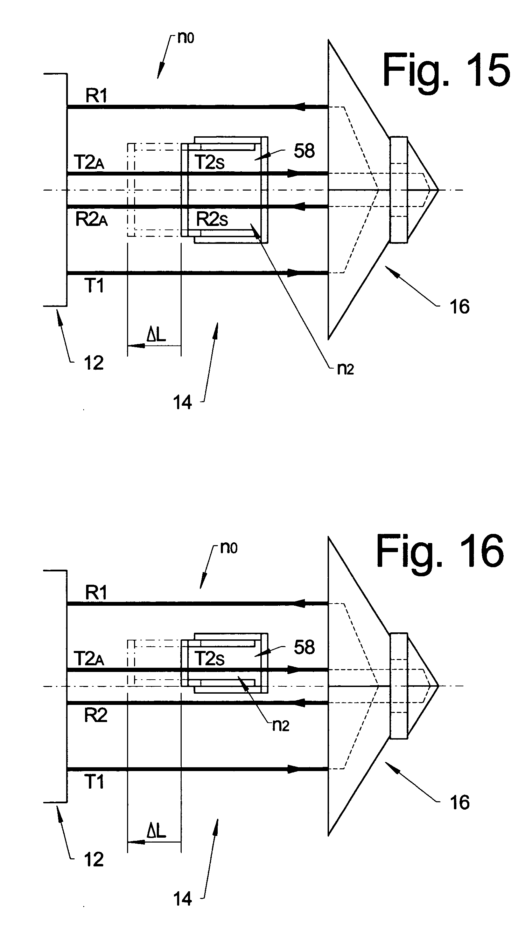

In a further modification as shown in Figure 15, only one T2 of the transmitted beams T1,T2 and its reflected beam R2 passes through a chamber 58. In this case, the apparatus provides the comparative refractive index of the fluid in the chamber 58 relative to air (assuming the apparatus is used in an environment of air); in other words n₂ = n₀ + ½λ.ΔW/ΔL.

As shown in Figure 16, these two modifications may be combined so that only one T2 of the beams passes through a chamber 58. In this case, n₂ = n₀ + λ.ΔW/ΔL.

It should be noted that the embodiment of the invention and the modifications thereto have been described above purely by way of example and that many other modifications and developments may be made thereto within the scope of the present invention.

## Claims

1. A method of determining the refractive index (n₂) of a sample (72) of a fluid, comprising: providing an interferometer (12,16) that produces a pair of beams (T1,R1;T2,R2) of light that are combined to form interferogram fringes with variations in the difference between the number of waves of the light in the beams; passing a portion (T2ₛ) of one (T2,R2) of the beams through the fluid sample; varying the length of the portion that passes through the fluid sample whilst counting the number of fringes caused by the length variation; and using the counted number and the amount (ΔL) of the distance variation in determining the refractive index of the fluid.

2. A method as claimed in claim 1, wherein the sample is contained between a pair of generally parallel windows (56), said portion of said one beam passes through both windows, and the spacing of the windows is varied in order to vary the length of the portion of said one beam passing through the fluid sample.

3. A method as claimed in claim 2, wherein the spacing of the windows is varied by moving at least one of the windows relative to the other window in a direction generally parallel to said portion of said one beam.

4. A method as claimed in any preceding claim, further including passing a second portion (R2ₛ) of said one beam through the fluid sample in the opposite direction to the first-mentioned portion, and varying the length of the second portion of said one beam that passes through the fluid sample by generally the same amount as the first-mentioned length variation.

5. A method as claimed in claim 4 when dependent on claim 2 or 3, wherein said second portion of said one beam passes through both windows.

6. A method as claimed in any preceding claim, further including passing a portion (R1ₛ) of the other beam (T1,R1) through a sample (70) of a second fluid or a vacuum, and varying the length of the portion of said other beam that passes through the second fluid sample or vacuum by generally the same amount as the first-mentioned length variation.

7. A method as claimed in claim 6, wherein the second sample is a reference sample having a known refractive index (n₁).

8. A method as claimed in claim 6 or 7, wherein the samples are contained in a body (34,36) having a high heat capacity relative to the samples.

9. A method as claimed in any of claims 6 to 8, wherein where the rates of change of refractive index with temperature of the first and second samples are similar.

10. A method as claimed in claim 6, wherein the portion of said other beam is passed through a vacuum.

11. A method as claimed in any of claims 6 to 10 when directly or indirectly dependent on claim 4, further including passing a second portion (T1ₛ) of said other beam through the second fluid sample or vacuum in the opposite direction to the first-mentioned portion thereof, and varying the length of the second portion of said other beam that passes through the second fluid sample or vacuum by generally the same amount as the first-mentioned length variation.

12. A method as claimed in claim 11 when indirectly dependent on claim 2, wherein said second sample or vacuum is also contained between said windows and each portion of said other beam also passes through both windows.

13. A method as claimed in claim 12, wherein said first and second portions of both beams are generally coplanar and mutually generally-parallel, and said first and second portions of said one beam are disposed between said first and second portions of said other beam or vice versa.

14. A method as claimed in any preceding claim, wherein the, or each, sample is a liquid.

15. An apparatus (10) for use in determining the refractive index (n₂) of a sample (72) of a fluid, comprising: an interferometer (12,16) arranged to produce a pair of beams (T1,R1;T2,R2) of light that are combined to form interferogram fringes with variations in the difference between the number of waves of the light in the beams; means (14) for containing the fluid sample such that a portion (T2ₛ) of one (T2,R2) of the beams passing through the fluid sample; means (38) for varying the length of the portion that passes through the fluid sample; and means (18) for counting the number of fringes caused by the length variation (ΔL).

16. An apparatus as claimed in claim 15, further including means (14) for containing a sample (70) of a second fluid or a vacuum such that a portion (R1ₛ) of the other beam (T1,R1) passes through the second fluid sample or vacuum, the length varying means being arranged to vary the length of the portion of said other beam that passes through the second fluid sample or vacuum by generally the same amount as the first mentioned length variation.

17. A refractometer module for use in an apparatus as claimed in claim 16, comprising the means for containing the first fluid sample, the means for containing the second fluid sample or vacuum, and the means for varying the length of the portions of the beams that pass through the first fluid sample and the second fluid sample or vacuum.
